Europäisches Patentamt

European Patent Office

Office européen des brevets

(11) Numéro de publication : **0 346 171 B1**

# (12) FASCICULE DE BREVET EUROPEEN

(45) Date de publication du fascicule du brevet :
06.05.92 Bulletin 92/19

(51) Int. Cl.⁵ : **B60T 11/20**

(21) Numéro de dépôt : **89401332.5**

(22) Date de dépôt : **12.05.89**

(54) **Dispositif émetteur de pression hydraulique en tandem.**

(30) Priorité : **31.05.88 FR 8807240**

(43) Date de publication de la demande :
**13.12.89 Bulletin 89/50**

(45) Mention de la délivrance du brevet :
**06.05.92 Bulletin 92/19**

(84) Etats contractants désignés :
**DE ES FR GB IT**

(56) Documents cités :
**FR-A- 1 571 663**
**GB-A- 977 268**
**GB-A- 1 215 055**

(73) Titulaire : **BENDIX EUROPE Services
Techniques S.A.
126 rue de Stalingrad
F-93700 Drancy (FR)**

(72) Inventeur : **Levrai, Roland
Bendix France S.A. 126 rue de Stalingrad
F-93700 Drancy (FR)**

EP 0 346 171 B1

Jouve, 18, rue Saint-Denis, 75001 PARIS

## Description

La présente invention concerne un dispositif émetteur de pression hydraulique en tandem, notamment destiné à engendrer une pression dans un circuit hydraulique d'un véhicule automobile.

De tels dispositifs sont déjà connus, et sont même imposés par la législation par exemple pour les systèmes de freinage hydraulique où deux circuits indépendants l'un de l'autre doivent être prévus, par exemple pour les roues avant et arrière, de sorte que le freinage soit conservé sur un circuit si un incident se produit sur l'autre. C'est ainsi qu'on a développé de nombreux types de maître-cylindres en tandem, comportant deux chambres de travail alimentant chacune un des circuits du système de freinage hydraulique. Tous ces types de maître-cylindres ont en commun le fait d'être constitués de nombreuses pièces, de façon à assurer leur fonctionnement aussi bien dans des conditions normales qu'en cas de défaillance d'un des circuits, ce qui leur donne une longueur assez importante. De plus, dans le cas où un dispositif d'assistance au freinage est prévu, il est courant de placer ce dernier dans le prolongement du maître-cylindre lui-même ou d'un dispositif émetteur de pression additionnel, ce qui augmente encore la dimension longitudinale de l'ensemble. L'implantation de cet ensemble dans le compartiment moteur peut alors poser des problèmes sur certains types de véhicules, en particulier avec conduite à droite.

Des dispositifs émetteurs de pression sont également utilisés dans les véhicules automobiles pour commander différents récepteurs de pression tels que des embrayages, des soupapes haute pression, etc... Ces émetteurs de pression hydraulique sont également de construction complexe et d'encombrement relativement important.

On connaît par le document FR-A-1 571 663 un tel maître-cylindre à deux circuits pour installations de freinage hydraulique, présentant dans un boîtier deux pistons divisés reliés ensemble en une unité par chaque fois un organe de liaison, un autre organe de liaison étant disposé entre les pistons divisés et un ressort de pression étant disposé entre le boîtier et chaque piston.

L'invention a donc pour but de prévoir un dispositif émetteur de pression en tandem pour deux circuits hydrauliques, de dimensions réduites, et fiable, c'est-à-dire pouvant émettre une pression dans un circuit si une défaillance se produit sur l'autre circuit.

Ce but de l'invention est atteint au moyen d'un dispositif émetteur de pression hydraulique en tandem, notamment pour circuit hydraulique dans un véhicule automobile, comprenant un premier piston coulissant de façon étanche dans un premier alésage, susceptible d'être actionné par un premier moyen d'actionnement, et transmettant une première pression à au moins un récepteur de pression, et un second piston coulissant de façon étanche dans un second alésage, susceptible d'être actionné par un second moyen d'actionnement et transmettant une seconde pression à au moins un autre récepteur de pression, les premier et second pistons étant ramenés dans leur position de repos respectivement par les premier et second moyens d'actionnement, le premier piston étant actionné, lors de son retour en position de repos, par le premier moyen d'actionnement par l'intermédiaire d'une goupille fixée rigidement à ce premier moyen d'actionnement et s'étendant radialement à l'extérieur de celui-ci dans des ouvertures oblongues du premier piston, le second piston étant actionné, lors de son retour en position de repos, par le second moyen d'actionnement par l'intermédiaire d'une goupille fixée rigidement à ce second moyen d'actionnement et s'étendant radialement à l'extérieur de celui-ci dans des ouvertures oblongues du second piston.

Selon l'invention, le second moyen d'actionnement est relié au premier piston par un moyen d'amortissement fluide.

L'invention sera maintenant décrite, à titre d'exemple illustratif mais nullement limitatif, en se référant aux dessins annexés, dans lesquels :

– la Figure 1 représente en coupe longitudinale un mode de réalisation de l'invention, et

– la Figure 2 représente une variante du mode de réalisation de la figure 1.

Dans la description qui va suivre, on appellera par convention "arrière" l'extrémité vers laquelle se déplacent les pièces mobiles lorsque ces pièces reviennent vers leur position de repos et "avant" l'extrémité vers laquelle se déplacent les pièces mobiles lorsqu'elles sont actionnées. Les extrémités arrière sont orientées vers la droite sur les figures.

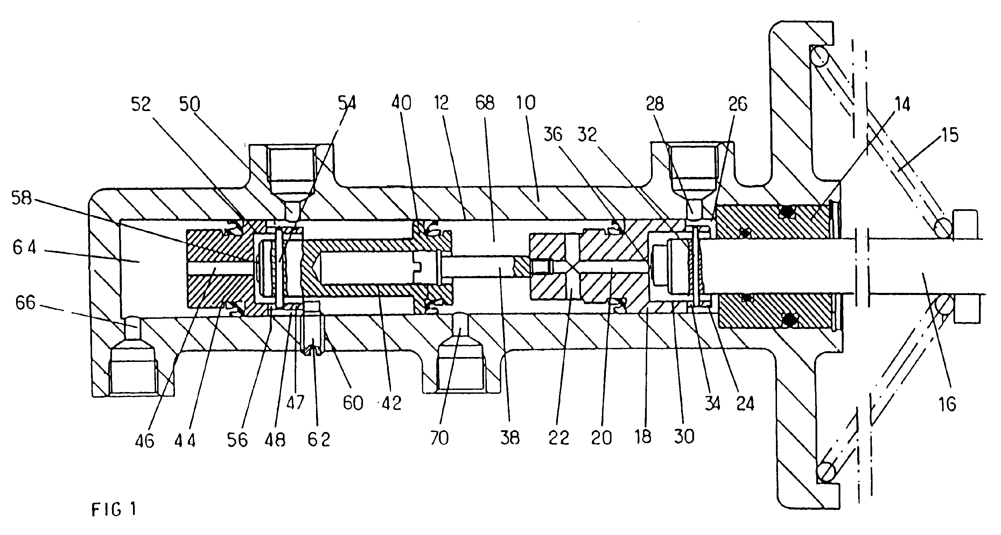

On a représenté sur la figure 1 un dispositif émetteur de pression hydraulique en tandem conforme à un premier mode de réalisation de l'invention, et constitué d'un corps 10, de forme générale cylindrique, dans lequel est pratiqué un alésage borgne 12. Cet alésage reçoit à son extrémité arrière un manchon 14 dans lequel coulisse de façon étanche une tige d'actionnement 16. Cette tige peut être elle-même actionnée directement par une pédale de frein (non représentée), par une tige de poussée d'un servomoteur (non représenté), ou par tout autre moyen.

Dans l'alésage 12 coulisse de façon étanche un piston étagé 18 muni d'un perçage axial 20 et d'un perçage diamétral 22 de façon à faire communiquer les espaces situés en avant et en arrière de ce piston. Le piston 18 comporte à son extrémité arrière une partie 24 de diamètre inférieur à celui de l'alésage 12, définissant ainsi un espace annulaire 26, communiquant par un orifice 28 pratiqué dans le corps 10 avec une source de liquide (non représentée).

Le piston 18 est muni à sa partie arrière d'un alésage borgne 30 et coopère avec la tige 16 au moyen d'une goupille 32 fixée rigidement à cette dernière, dans sa partie avant pénétrant dans l'alésage 30, la goupille 32 s'étendant radialement à l'extérieur de la tige 16 dans des ouvertures oblongues 34 du piston 18 de longueur supérieure au diamètre de la goupille de façon à ménager une certaine course morte lorsque la tige 16 avance vers le piston 18. La tige 16 est de plus pourvue à son extrémité avant d'un clapet 36 pouvant ou non obturer le perçage axial 20 du piston 18. Celui-ci est solidaire à son extrémité avant d'une tige 38.

Dans l'alésage 12 coulisse également de façon étanche un piston intermédiaire étagé 40 dont l'extrémité arrière est munie d'un alésage borgne 42 dans lequel peut coulisser la tige 38 portée par le piston 18 de façon à former une liaison entre ces deux pistons avec amortissement fluide.

Dans l'alésage 12 coulisse également de façon étanche un piston 44. Ce piston est lui aussi muni d'un perçage axial 46 faisant communiquer les espaces situés en avant et en arrière de ce piston. Le piston 44 comporte à son extrémité arrière une partie 47 de diamètre inférieur à celui de l'alésage 12, définissant ainsi un espace annulaire 48, communiquant par un orifice 50 pratiqué dans le corps 10 avec une source de liquide (non représentée).

Le piston 44 est muni à sa partie arrière d'un alésage borgne 52 et coopère avec le piston intermédiaire 40 au moyen d'une goupille 54 fixée rigidement à ce dernier dans sa partie avant pénétrant dans l'alésage 52, la goupille 54 s'étendant radialement à l'extérieur du piston 40 dans des ouvertures oblongues 56 du piston 44 de longueur supérieure au diamètre de la goupille de façon à ménager une certaine course morte lorsque le piston 40 avance vers le piston 44. Le piston intermédiaire 40 est de plus pourvu à son extrémité avant d'un clapet 58 pouvant ou non obturer le perçage axial 46 du piston 44. Le corps 10 est également muni d'un alésage taraudé 60, recevant une vis 62, faisant saillie à l'intérieur de l'alésage 12, et jouant le rôle de butée arrière pour limiter le retour du piston 44.

La chambre de travail primaire, constituée par l'espace 68 entre le piston 18 et le piston 40 communique, par l'orifice 70, ménagé dans le corps 10, avec des récepteurs de pression hydraulique (non représentés) par des canalisations (non représentées). De même, la chambre de travail secondaire constituée par l'espace 64 entre le piston 44 et le fond de l'alésage 12 communique, par l'orifice 66 ménagé dans le corps 10, avec d'autres récepteurs de pression hydraulique (non représentés) par des canalisations (non représentées).

Le fonctionnement du dispositif émetteur de pression hydraulique en tandem qui vient d'être décrit est le suivant. Dans sa position de repos, toutes les pièces mobiles occupent leur position arrière, c'est à dire sur la droite en regardant les figures.

Le circuit primaire est constitué par l'orifice 28, l'espace annulaire 26, les ouvertures 34, l'espace entre la tige 16 et le piston 18, le perçage axial 20, le perçage diamétral 22, l'espace 68 et l'orifice 70.

Le circuit secondaire est constitué par l'orifice 50, l'espace annulaire 48, les ouvertures 56, l'espace entre le piston 40 et le piston 44, le perçage axial 46, l'espace 64 et l'orifice 66.

Au repos, les récepteurs de pression hydraulique (non représentés) communiquent au travers des circuits primaire et secondaire avec une source de liquide et sont à la même pression que cette source de liquide.

Lors de la mise en action du dispositif, la tige 16 est sollicitée vers l'avant (vers la gauche en regardant la Figure 1), par une pédale de frein, par la tige de poussée d'un servomoteur ou par tout autre moyen. Après une certaine course morte prévue par le jeu laissé entre la goupille 32 et les ouvertures oblongues 34, le clapet 36 vient obturer le perçage axial 20 du piston 18, interrompant le circuit primaire. La tige 16 pousse alors directement le piston 18 et la tige 38.

La tige 38 tend à pénétrer dans l'alésage postérieur 42 du piston 40 mais, du fait de l'accouplement à amortissement fluide entre ces deux pièces, elle entraîne d'abord dans son mouvement le piston intermédiaire 40. Après une certaine course morte prévue par le jeu laissé entre la goupille 54 et les ouvertures oblongues 56, le clapet 58 vient obturer le perçage axial 46 du piston 44, interrompant à son tour le circuit secondaire. Le piston 40 pousse alors directement le piston 44. Par l'action conjuguée de la liaison avec amortissement fluide entre les pistons 40 et 44, et de la faible longueur des courses mortes au niveau des goupilles 32 et 54, la fermeture des clapets 36 et 58 est pratiquement simultanée. Les espaces 68 et 64 sont alors tous deux isolés des sources de fluide, et voient leur volume diminuer, créant ainsi chacun un accroissement de pression transmis aux récepteurs de pression hydraulique par les orifices 70 et 66.

Dès cessation de l'effort de freinage, la tige 16 revient en arrière sous l'action d'un ressort de rappel 15, entraînant avec elle, par la goupille 32, le piston 18 et la tige 38.

L'accouplement à amortissement fluide entre la tige 38 et le piston 40 provoque alors l'entraînement du piston intermédiaire 40 par la tige 38, le piston 40 entraînant enfin le piston 44 par l'intermédiaire de la goupille 54 jusqu'à ce que celui-ci vienne en butée arrière sur la vis 62, pendant que la tige 38 sort de l'alésage 42 et permet au piston 18 de venir en butée arrière sur le manchon 14. Les clapets 36 et 58 s'ouvrent alors, permettant au liquide de refluer des récepteurs de pression hydraulique à la source de fluide par les circuits primaire et secondaire.

On voit ainsi que, par l'action combinée de l'accouplement à amortissement fluide entre les pistons 40 et 44 et de l'entraînement des pistons 18 et 40 respectivement par les goupilles 36 et 58, les pistons 18 et 40 reviennent dans leur position de repos sans qu'il soit nécessaire d'utiliser des ressorts de rappel, ce qui permet de donner aux espaces 68 et 64 des volumes réduits, d'où une longueur moindre du dispositif émetteur de pression, et un poids moindre.

De plus, le fonctionnement du dispositif est assuré en cas de défaillance :

– si le circuit primaire est défectueux, c'est à dire si une fuite empêche la montée en pression dans ce circuit, la tige 16 pousse le piston 18 qui vient en butée sur le piston 40 qui pousse alors le piston 44, ce qui provoque la montée en pression dans le circuit secondaire.

– si le circuit secondaire est défectueux, le piston 44 vient en butée dans le fond de l'alésage 12, le piston 40 vient en butée sur lui, la montée en pression dans le circuit primaire pouvant avoir lieu.

Dans le mode de réalisation qui vient d'être décrit, si les sources de fluide reliées aux orifices 28 et 50 ne sont pas sous pression, on obtiendra aux orifices de sortie 70 et 66 des pressions égales, dépendant directement de l'effort F appliqué sur la tige 16. En effet, lors du début de l'actionnement, après que les clapets 36 et 58 aient été fermés, la pression P régnant dans la chambre 68, est transmise par l'orifice 70 à un récepteur de pression, mais elle est également appliquée sur la section arrière S du piston 40, transmettant l'effort F = P.S. à la section avant S du piston 44, créant ainsi dans la chambre 64 la pression

$$P = \frac{P.S}{S} = P$$ transmise par l'orifice 66 à un autre récepteur de pression.

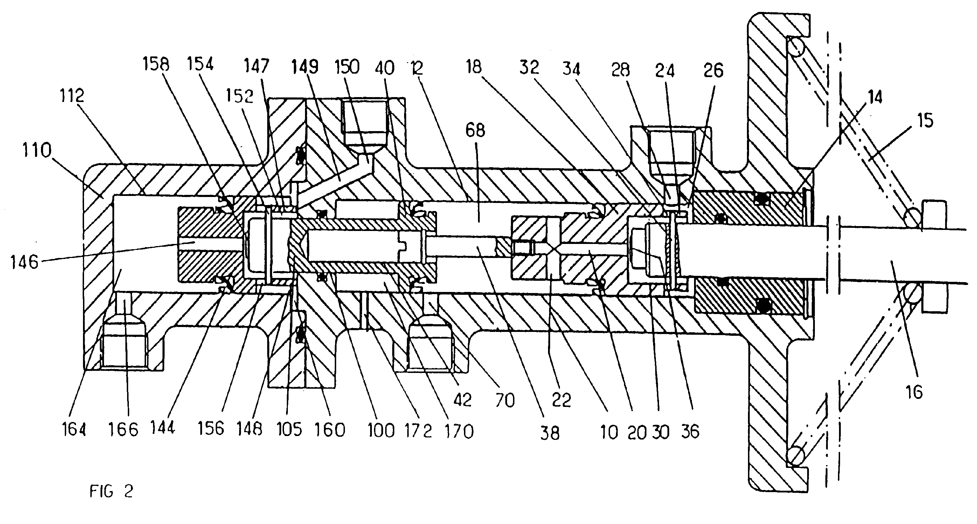

De même, si les sources de fluide reliées aux orifices 28 et 50 sont soumises à la même pression, le dispositif émetteur de pression transmettra par les orifices de sortie 70 et 66 cette pression, augmentée de celle qui est créée par l'effort reçu de la tige 16. Cependant, pour des raisons de sécurité, il est alors préférable d'adopter le mode de réalisation représenté sur la Figure 2.

Sur la figure 2, les éléments identiques à ceux de la Figure 1 sont repérés par les mêmes références numériques.

A la différence de la Figure 1, l'alésage étagé 12 est ici traversant, et comporte un étage de plus, repéré 100, dans lequel coulisse de façon étanche la tête 105 du piston intermédiaire 40, qui dépasse donc du corps 10. Sur le corps 10 est fixée une pièce 110 comportant un alésage étagé borgne 112 de même axe que l'alésage 12 dans lequel coulisse de façon étanche un piston 144. Ce piston est lui aussi muni d'un perçage axial 146 faisant communiquer les espaces situés en avant et en arrière de ce piston. Le piston 144 comporte à son extrémité arrière une partie 147 de diamètre inférieur à celui de l'alésage 112, définissant ainsi un espace annulaire 148.

Le piston 144 est muni à son extrémité arrière d'un alésage borgne 152 et coopère avec le piston intermédiaire 40 au moyen d'une goupille 154 fixée rigidement à ce dernier et s'étendant radialement à l'extérieur de celui-ci dans des ouvertures oblongues 156 du piston 144 de longueur supérieure au diamètre de la goupille de façon à ménager une certaine course morte lorsque le piston 40 avance vers le piston 144. Le piston intermédiaire 40 est comme précédemment pourvu à son extrémité avant d'un clapet 158 pouvant ou non obturer le perçage axial 146 du piston 144.

L'espace 164 entre le piston 144 et le fond de l'alésage 112 communique, par l'orifice 166 ménagé dans la pièce 110, avec des récepteurs de pression (non représentés) par des canalisations (non représentées).

La partie arrière de l'alésage 112, de plus grand diamètre que celui-ci, définit un espace annulaire 160, communiquant avec l'espace annulaire 148. L'espace annulaire 160 communique avec un orifice 150, relié à une source de fluide, au moyen d'un perçage 149 pratiqué dans le corps 10. Pour permettre le coulissement du piston 40, l'espace annulaire 170 entre lui et l'alésage 12 est, de façon classique, soumis à une pression légèrement inférieure à la pression atmosphérique au moyen d'un perçage 172 pratiqué dans le corps 10 et muni d'une soupape empêchant l'entrée d'eau ou de vapeurs corrosives.

Dans le dispositif de la Figure 2, le circuit primaire est identique à celui de la Figure 1, tandis que le circuit secondaire est ici constitué par l'orifice 150, le perçage 149, l'espace annulaire 160, l'espace annulaire 148, les ouvertures 156, l'espace entre le piston 40 et le piston 144, le perçage axial 146, l'espace 164 et l'orifice 166.

Si les sources de fluide reliées aux orifices 28 et 150 ne sont pas sous pression et si le diamètre de l'alésage 112 est égal à celui de l'alésage 12, le fonctionnement du dispositif de la Figure 2 est identique à celui de la Figure 1. En donnant à l'alésage 112 un diamètre différent de celui de l'alésage 12, on pourra obtenir aux orifices de sortie 70 et 166 des pressions différentes, en fonction de la différence de diamètre des alésages 12 et 112.

Un cas particulièrement intéressant d'utilisation du dispositif de la Figure 2 est celui où les sources de fluide, reliées aux orifices 28 et 150, sont déjà sous pression. Le dispositif émetteur de pression en tandem selon l'invention fonctionne alors en amplificateur de pression, et fournit, une pression égale aux orifices de sortie par un choix correct des sections des alésages 12 et 112.

De façon plus précise, en appelant $P_e$ la pression de liquide à l'entrée des circuits primaire et secondaire, $P_1$ et $P_2$ les pressions du liquide aux sorties respectivement des circuits primaire et secondaire, $S_1$ et $S_2$ les sections des alésages 12 et 112 respective-

ment, $S_3$ la section de l'espace annulaire compris entre le piston 144 et l'alésage 112, $S_4$ la section de l'espace annulaire compris entre la tige 16 et l'alésage 12, et F l'effort transmis par la tige 16, on comprend que l'équilibre du système lors d'un actionnement est tel que le piston primaire 18 est soumis à l'avant a une force $P_1S_1$, et à l'arrière à une force $P_eS_4$ augmentée de l'effort F, tandis que le piston secondaire 144 est soumis à l'avant à une force $P_2S_2$, et à l'arrière à une force $P_eS_3$, augmentée elle aussi de la force $P_1S_1$.

L'équilibre du système impose que l'on ait pour chaque piston :

$$P_1S_1 = P_eS_4 + F$$

et

$$P_2S_2 = P_eS_3 + P_1S_1$$

Si l'on désire que les pressions $P_1$ et $P_2$ aux sorties des circuits primaire et secondaire soient égales, pour toute pression d'entrée $P_e$, il suffit que l'on ait :

$$S_2 = S_1 \left( 1 + \frac{P_eS_3}{P_eS_4 + F} \right)$$

ou, en appelant P la pression commune aux deux sorties, et R le rapport de la pression de sortie à la pression d'entrée $R = \dfrac{P}{P_e}$

soit

$$S_2 = S_1 + \frac{S_3}{R}$$

c'est à dire que $S_2$ soit supérieur à $S_1$ selon la relation ci-dessus. Comme précédemment, un autre choix de $S_1$ et de $S_2$ conduira à des pressions $P_1$ et $P_2$ aux sorties des circuits primaire et secondaire différentes, selon toute proportion désirée.

Il est bien entendu que l'invention ne se limite pas aux modes de réalisation représentés, mais est au contraire susceptible de recevoir de nombreuses modifications accessibles à l'homme de l'art. Par exemple, les pressions des sources de liquide à l'entrée des circuits primaire et secondaire peuvent être différentes, et, par le choix des sections $S_1$ et $S_2$, on obtiendra à la sortie du dispositif des pressions égales. Il est d'autre part évident que l'invention peut s'appliquer à tout type de maître-cylindre tandem, par exemple du type à trou de dilatation, à clapet, à soupape basculante, etc... De même, dans certains cas, il sera possible de prévoir que les pistons primaire et/ou secondaire soient solidaires de leur moyen d'actionnement respectif, la tige d'actionnement jouant le rôle de piston primaire, et/ou le piston intermédiaire jouant le rôle de piston secondaire. Enfin, lorsque le dispositif de l'invention est destiné à un circuit de freinage hydraulique, il peut constituer le maître-cylindre, actionné par la pédale de frein ou par un servomoteur, ou le maître-cylindre auxiliaire, ou être inséré dans un dispositif d'anti-blocage de roues.

**Revendications**

1. Dispositif émetteur de pression hydraulique en tandem, notamment pour circuit hydraulique dans un véhicule automobile, comprenant un premier piston (18) coulissant de façon étanche dans un premier alésage, susceptible d'être actionné par un premier moyen d'actionnement (16), et transmettant une première pression à au moins un récepteur de pression, et un second piston (44, 144) coulissant de façon étanche dans un second alésage, susceptible d'être actionné par un second moyen d'actionnement (40, 105) et transmettant une seconde pression à au moins un autre récepteur de pression, les premier et second pistons (18, 44) étant ramenés dans leur position de repos respectivement par les premier et second moyens d'actionnement (16, 40, 105), le premier piston (18) étant actionné, lors de son retour en position de repos, par le premier moyen d'actionnement (16) par l'intermédiaire d'une goupille (32) fixée rigidement à ce premier moyen d'actionnement et s'étendant radialement à l'extérieur de celui-ci dans des ouvertures oblongues (34) du premier piston (18), le second piston (44, 144) étant actionné, lors de son retour en position de repos, par le second moyen d'actionnement (40, 105) par l'intermédiaire d'une goupille (54, 154) fixée rigidement à ce second moyen d'actionnement et s'étendant radialement à l'extérieur de celui-ci dans des ouvertures oblongues (56, 156) du second piston (44, 144), caractérisé en ce que le second moyen d'actionnement est relié au premier piston par un moyen d'amortissement fluide.

2. Dispositif émetteur de pression hydraulique en tandem selon la revendication 1, caractérisé en ce que le second moyen d'actionnement est constitué par un piston intermédiaire (40) coulissant de façon étanche dans le premier alésage (12).

3. Dispositif émetteur de pression hydraulique en tandem selon l'une des revendications 1 ou 2, caractérisé en ce que le premier piston est solidaire du premier moyen d'actionnement.

4. Dispositif émetteur de pression hydraulique en tandem selon l'une quelconque des revendications 1 à 3, caractérisé en ce que le second piston est solidaire du second moyen d'actionnement.

5. Dispositif émetteur de pression hydraulique en tandem selon l'une quelconque des revendications 1 à 4, caractérisé en ce que le second piston est relié au premier piston par un moyen d'amortissement fluide.

6. Dispositif émetteur de pression hydraulique en tandem selon l'une quelconque des revendications 1 à 5, caractérisé en ce que les premier et second alésages ont des diamètres identiques.

7. Dispositif émetteur de pression hydraulique en tandem selon l'une quelconque des revendications 1 à 5, caractérisé en ce que les premier et second alésages ont des diamètres différents.

8. Dispositif émetteur de pression hydraulique en tandem selon l'une quelconque des revendications 1 à 5, caractérisé en ce que le second alésage à un diamètre supérieur à celui du premier alésage.

## Patentansprüche

1. Tandem-Hydraulikdruck-Abgabevorrichtung, insbesondere für einen Hydraulikkreis in einem Kraftfahrzeug, mit einem ersten Kolben (18), der auf dichte Weise in einer ersten Bohrung verschiebbar ist, der dazu geeignet ist, von einem ersten Betätigungsmittel (16) betätigt zu werden, und der einen ersten Druck an wenigstens eine Druckaufnahmeeinrichtung überträgt, und einem zweiten Kolben (44, 144), der auf dichte Weise in einer zweiten Bohrung verschiebbar ist, der dazu geeignet ist, von einem zweiten Betätigungsmittel (40, 105) betätigt zu werden, und der einen zweiten Druck an wenigstens eine weitere Druckaufnahmeeinrichtung überträgt, wobei der erste und der zweite Kolben (18, 44) vom ersten bzw. vom zweiten Betätigungsmittel (16, 40, 105) in ihre jeweiligen Ruhepositionen zurückgeführt werden, wobei der erste Kolben (18) nach seiner Rückkehr in die Ruheposition vom ersten Betätigungsmittel (16) über einen an diesem ersten Betätigungsmittel starr befestigten Stift (32) betätigt wird, der sich in radialer Richtung aus diesem heraus in längliche Öffnungen (34) des ersten Kolbens (18) erstreckt, und wobei der zweite Kolben (44, 144) nach seiner Rückkehr in die Ruheposition vom zweiten Betätigungsmittel (40, 105) über einen an diesem zweiten Betätigungsmittel starr befestigten Stift (54, 154) betätigt wird, der sich in radialer Richtung aus diesem heraus in längliche Öffnungen (56, 156) des zweiten Kolbens (44, 144) erstreckt, dadurch gekennzeichnet, daß das zweite Betätigungsmittel mit dem ersten Kolben über ein Fluiddämpfungsmittel verbunden ist.

2. Tandem-Hydraulikdruck-Abgabevorrichtung gemäß Anspruch 1, dadurch gekennzeichnet, daß das zweite Betätigungsmittel von einem Zwischenkolben (40) gebildet ist, der auf dichte Weise in der ersten Bohrung (12) verschiebbar ist.

3. Tandem-Hydraulikdruck-Abgabevorrichtung gemäß einem der Anprüche 1 oder 2, dadurch gekennzeichnet, daß der erste Kolben mit dem ersten Betätigungsmittel verbunden ist.

4. Tandem-Hydraulikdruck-Abgabevorrichtung gemäß einem der Ansprüche 1 bis 3, dadurch gekennzeichnet, daß der zweite Kolben mit dem zweiten Betätigungsmittel verbunden ist.

5. Tandem-Hydraulikdruck-Abgabevorrichtung gemäß einem der Ansprüche 1 bis 4, dadurch gekennzeichnet, daß der zweite Kolben mit dem ersten Kolben über ein Fluiddämpfungsmittel verbunden ist.

6. Tandem-Hydraulikdruck-Abgabevorrichtung gemäß einem der Ansprüche 1 bis 5, dadurch gekennzeichnet, daß die erste und die zweite Bohrung identische Durchmesser besitzen.

7. Tandem-Hydraulikdruck-Abgabevorrichtung gemäß einem der Ansprüche 1 bis 5, dadurch gekennzeichnet, daß die erste und die zweite Bohrung verschiedene Durchmesser besitzen.

8. Tandem-Hydraulikdruck-Agabevorrichtung gemäß einem der Ansprüche 1 bis 5, dadurch gekennzeichnet, daß die zweite Bohrung einen Durchmesser besitzt, der größer als derjenige der ersten Bohrung ist.

## Claims

1. Tandem hydraulic pressure transmitter device, particularly for a hydraulic circuit in a motor vehicle, comprising a first piston (18) sliding sealingly in a first bore, adapted to be operated by a first operating means (16), and transmitting a first pressure to at least one pressure receiver, and a second piston (44, 144) sliding sealingly in a second bore, adapted to be operated by a second operating means (40, 105), and transmitting a second pressure to at least one other pressure receiver, the first and second pistons (18, 44) being returned to their positions of rest by the first and second operating means (16, 40, 105) respectively, the first piston (18) being operated for its return to its position of rest by the first operating means (16) with the aid of a pin (32) fixed rigidly to said first operating means and extending radially out of the latter into oblong apertures (34) in the first piston (18), the second piston (44, 144) being operated for its return to its position of rest by the second operating means (40, 105) with the aid of a pin (54, 154) fixed rigidly to said second operating means and extending radially out of the latter into oblong apertures (56, 156) in the second piston (44, 144), characterised in that the second operating means is connected to the first piston by a fluid damping means.

2. Tandem hydraulic pressure transmitter device according to Claim 1, characterised in that the second operating means consists of an intermediate piston (40) sliding sealingly in the first bore (12).

3. Tandem hydraulic pressure transmitter device according to either of Claims 1 or 2, characterised in that the first piston is fastened to the first operating means.

4. Tandem hydraulic pressure transmitter device according to any one of Claims 1 to 3, characterised in that the second piston is fastened to the second operating means.

5. Tandem hydraulic pressure transmitter device according to any one of Claims 1 to 4, characterised in that the second piston is connected to the first piston by a fluid damping means.

6. Tandem hydraulic pressure transmitter device according to any one of Claims 1 to 5, characterised in that the first and second bores have identical diameters.

7. Tandem hydraulic pressure transmitter device according to any one of Claims 1 to 5, characterised in that the first and second bores have different diameters.

8. Tandem hydraulic pressure transmitter device according to any one of Claims 1 to 5, characterised in that the second bore has a diameter greater than that of the first bore.

FIG 1

FIG 2

EP 0 346 171 B1